# EUROPÄISCHE PATENTSCHRIFT

(11) **EP 1 645 354 B1**
(45) Veröffentlichungstag und Bekanntmachung des Hinweises auf die Patenterteilung: **26.01.2011**
(21) Anmeldenummer: 05020030.2
(22) Anmeldetag: 14.09.2005
(51) Int. Cl.: B23K 11/00, B23K 11/36, B23K 37/04, B23K 11/31

(54) **Schweißgerät, insbesondere Mutter-Schweißgerät**
Welding apparatus, in particular nut welding apparatus
Dispositif de soudage, en particulier dispositif de soudage d'écrous

(30) Priorität: 07.10.2004 DE 102004048941
(43) Veröffentlichungstag der Anmeldung: 12.04.2006
(73) Patentinhaber: Otto Bihler Handels-Beteiligungs-GmbH, 87642 Halblech (DE)
(72) Erfinder: Bihler, Mathias, 87642 Halblech (DE); Köpf, Johann, 87642 Halblech (DE)
(74) Vertreter: Tiesmeyer, Johannes

(56) Entgegenhaltungen:
- DE-U- 6 610 394
- DE-U1- 29 917 213
- JP-A- 9 122 922

## Beschreibung

Die vorliegende Erfindung betrifft ein Schweißgerät zur Verschweißung eines Kleinteils, insbesondere einer Mutter, mit einem Kleinteilträger, wobei das Schweißgerät umfasst: wenigstens zwei Schweißelektroden, welche mit einem Schweißspalt zwischen sich vorgesehen sind, wenigstens zwei relativ zueinander bewegliche Schweißarme, von welchen jeder wenigstens eine Schweißelektrode trägt, wobei eine Relativbewegung der Schweißarme eine Veränderung der Schweißspaltweite bewirkt, sowie ein numerisch steuerbarer Elektromotor als Kraftgerät, welches als Relativbewegungsantrieb mit wenigstens einem der Schweißarme über ein Bewegung und Kraft übertragendes Getriebe gekoppelt ist, um den wenigstens einen Schweißarm zur Bewegung, insbesondere zu einer Nachsetzbewegung während eines Schweißvorgangs, relativ zum jeweils anderen Schweißarm anzutreiben.

Derartige Schweißgeräte sind aus dem Stand der Technik hinreichend bekannt. Als Kraftgerät dient bei bekannten Schweißgeräten eines ersten Typs eine Federanordnung, welche derart unter Vorspannung gesetzt ist, dass sie in einem Schweißvorbereitungszustand des Schweißgeräts das Kleinteil und den Kleinteilträger zwischen den Schweißelektroden geklemmt hält.

Das Kleinteil befindet sich dabei an der am Kleinteilträger vorgesehenen Anbringungsstelle. Weiterhin sind am Kleinteil Materialanhäufungen vorgesehen, welche während des Schweißvorgangs aufschmelzen und so für eine Schweißverbindung des Kleinteils mit dem Kleinteilträger sorgen.

Durch das Abschmelzen der Materialansammlungen ist als Nachsetzbewegung eine Nachführung der klemmenden Schweißelektroden erforderlich, so dass keine Luftspaltstrecke zwischen den Schweißelektroden und dem Schweißgut oder/und zwischen dem Kleinteil und dem Kleinteilträger als Schweißgut entsteht.

Nachteilig an den Schweißgeräten des Standes der Technik mit einer

Federanordnung als Kraftgerät ist dabei, dass die Feder oder Federanordnung eine durch ihre Vorspannung, ihre Federhärte und die zu bewegenden Massen bestimmte Eigenbewegungscharakteristik aufweist und daher insbesondere die Nachsetzbewegung der Schweißelektroden während des Schweißvorgangs durch die Bauart des Schweißgeräts und die verwendete Feder in ihrem zeitlichen Verlauf eindeutig vorbestimmt ist. Um ein möglichst gutes Schweißergebnis zu erhalten, ist es daher eigentlich erforderlich, den Schweißprozess so zu führen, dass das Abschmelzen von Materialansammlungen der Bewegungscharakteristik des Schweißgeräts entspricht. Somit bildet die Federvorspannung der Schweißarme bzw. Schweißelektroden im Schweißvorbereitungszustand des Schweißgeräts einen die Taktzeit des Schweißgeräts und damit dessen Produktivität begrenzenden Faktor.

Darüber hinaus ist in der Regel gewünscht, dass ein und dasselbe Schweißgerät Kleinteile unterschiedlicher Größe mit ebenfalls unterschiedlichen Kleinteilträgern verschweißen kann. In der Regel ist jedoch die Masse der zur Verschweißung vorgesehenen Materialsansammlungen proportional zur Größe des zu verschweißenden Kleinteils, so dass der Abschmelzvorgang während des Verschweißens von Kleinteil und Kleinteilträger abhängig von der Größe des jeweiligen Kleinteils oder/und Kleinteilträgers unterschiedlich verläuft. Auf diese unterschiedlichen zeitlichen Verläufe der Abschmelzvorgänge kann ein Schweißgerät mit federvorgespannten Schweißelektroden nur schwer angepasst werden. In der Regel ist hier ein Kompromiss zu wählen, welcher stets zu Lasten der Produktivität des Schweißgeräts geht.

Ein Schweißgerät der Eingangs genannten Art mit einem numerisch gesteuerten Elektromotor als Kraftgerät ist aus der DE 299 17 213 U1 bekannt. Zum Stand der Technik wird ferner auf die JP 9122922 A verwiesen.

Es ist Aufgabe der vorliegenden Erfindung, ein Schweißgerät der eingangs genannten Art bereitzustellen, welches Kleinteile und Kleinteilträger in kurzen Taktzeiten mit hoher Schweißverbindungsqualität verschweißen kann und zuverlässig funktioniert.

Diese Aufgabe wird erfindungsgemäß durch ein gattungsgemäßes Schweißgerät gelöst, bei welchem das Getriebe eine mechanische Kurvensteuerung umfasst, bei welcher an einem der Bauteile aus Elektromotor und Schweißarm ein Nocken, vorzugsweise in Form einer Stützrolle vorgesehen ist, der an einer Nockenbahn verschiebbar anliegt, welche mit dem jeweils anderen Bauteil aus Elektromotor und Schweißarm verbunden ist.

Aufgrund ihrer Zuverlässigkeit, ihrer geringen Fehleranfälligkeit und ihrer schnellen Bewegungsübertragung umfasst das Getriebe die mechanische Kurvensteuerung, bei welcher an einem der Bauteile aus Elektromotor und Schweißarm ein Nocken vorgesehen ist, der an einer Nockenbahn verschiebbar, aus Verschleißgründen vorzugsweise abrollbar anliegt, welche mit dem jeweils anderen Bauteil aus Elektromotor und Schweißarm verbunden ist. Eine derartige Nockenbahn ist vor allem im Zusammenwirken mit einer eine Drehbewegung in eine Translationsbewegung umsetzenden Vorrichtung vorteilhaft, da dann über einen Nocken-Nockenbahn-Eingriff wenigstens ein Schweißarm zuverlässig, schnell und sehr präzise zur Veränderung des Schweißspalts verlagerbar ist.

Mit dem nummerisch steuerbaren Elektromotor kann der Schweißspalt zwischen den Schweißelektroden durch geeignete Motoransteuerung in nahezu beliebiger Art und Weise verändert werden. So ist nicht nur eine auf das jeweils zu verarbeitende Schweißgut abgestimmte Bewegungsführung der Schweißelektroden problemlos möglich, sondern auch eine "Umrüstung" des Schweißgeräts zur Verschweißung unterschiedlicher Kleinteile oder/und Kleinteilträger. Die "Umrüstung" kann dabei vorteilhaft rein steuerungstechnisch erfolgen, so dass am Schweißgerät selbst keinerlei konstruktive Änderungen vorgenommen werden müssen. Für die in Frage kommenden Kleinteile und Kleinteilträger können vor einem Einsatz des Schweißgeräts in der Fertigung experimentell geeignete Betriebsparameter ermittelt und in einem Speicher hinterlegt werden.

Die Schweißarme sind in der Regel längliche Bauteile, an deren einem Längsende die Schweißelektroden festgelegt sind. Eine vorteilhafte Ausführungsform eines Schweißgeräts mit niedriger Bauhöhe erhält man dann, wenn der Elektromotor ein sich längs einer Motorerstreckungsachse erstreckendes längliches Bauteil ist, wobei der Motor derart angeordnet ist, dass die Motorerstreckungsachse im Wesentlichen parallel zu einer Schweißarmlängsachse eines Schweißarms ist. Ein solches Schweißgerät mit niedriger Bauhöhe kann in äußerst vorteilhafter Art und Weise in eine Presse oder Pressenstrecke einer Fertigungsanlage integriert sein, so dass beispielsweise der Kleinteilhalter während des Aufschweißens der Mutter gleichzeitig umgeformt werden kann.

Besonders niedrig kann die Bauhöhe des Schweißgeräts dadurch gehalten werden, dass die wenigstens zwei Schweißarme mit parallelen oder quasi-parallelen Schweißarmlängsachsen angeordnet sind. Mit "quasi-parallel" ist dabei eine Anordnung der Schweißarme bezeichnet, bei welchem die Schweißarmlängsachsen zwar geringfügig geneigt angeordnet sind, so dass sie einander tatsächlich schneiden, jedoch der Schnittpunkt weit entfernt von dem Schweißgerät liegt, etwa von der Schweißelektrode weiter als die 5-fache Länge der Schweißarme entfernt liegt. Schweißarme mit quasi-parallelen Schweißarmlängsachsen sollen vor allem den Fall umfassen, dass die Schweißarme relativ zueinander drehbar vorgesehen sind, der Relativdrehwinkelbereich der beiden Schweißarme eine im Wesentlichen parallele Lage der Schweißarmlängsachsen enthält und der Relativdrehwinkel zwischen den beiden Schweißarmen jedoch gering ist, etwa kleiner als 10°, so dass sich die parallele Lage der Schweißarmlängsachsen durch die Verdrehung der Schweißarme nicht wesentlich ändert.

Grundsätzlich kann erfindungsgemäß daran gedacht sein, die Schweißarme zur Veränderung der Schweiß-spaltweite beliebig aufeinander zu und voneinander weg zu bewegen, etwa durch eine lineare Translation. Vorteilhaft ist es jedoch, wenn das Schweiß-gerät eine möglichst hohe Klemmkraft auf die in der Schweißvorbereitungs-stellung im Schweißspalt angeordneten Schweißteile: Kleinteil und Klein-teilträger, ausüben kann. Dies kann dadurch realisiert sein, dass die wenigstens zwei Schweißarme relativ zueinander verschwenkbar sind. Dann lässt sich die Hebelwirkung zur Verstärkung der vom Elektromotor bereit-gestellten Kraft ausnutzen. Vorzugsweise sind die zwei Schweißarme um eine zu den Schweißarmlängsachsen beider Schweißarme orthogonale Schwenkachse schwenkbar, so dass bei ausreichend großem Abstand der Schweißelektroden von der Schwenkachse und bei gleichzeitig geringem Schwenkwinkel die Krümmung der Elektrodenbahn vernachlässigbar ist.

Da in der Regel Elektromotoren Drehwellen als Bewegungsausgabeteile aufweisen, jedoch die Bewegung des Bewegungsausgabeteils des Elektromotors unter Umständen nicht ohne weiteres zur Verstellung der Schweißelektroden nutzbar ist, ist das Bewegungsausgabeteil des Elektromotors mit wenigstens einem Schweißarm über ein Bewegung und Kraft übertragendes Getriebe gekoppelt.

Das Getriebe kann eine eine Drehbewegung in eine Translationsbewegung umsetzende Vorrichtung aufweisen, um eine Translationsbewegung zur Verstellung der Schweißelektroden nutzen zu können. Bei dieser Umsetzung kann überdies eine gewünschte Drehgeschwindigkeits-Translationsgeschwindigkeits-Umsetzung erfolgen, so dass eine Translationsbewegung in einem gewünschten Geschwindigkeitsbereich vom Elektromotor erhalten werden kann. Eine derartige Vorrichtung kann ein Gewindetrieb, etwa eine Kugelumlaufspindel, oder ein Schnecken-Zahnstangengetriebe sein.

Grundsätzlich kann bei einer Weiterbildung der Erfindung daran gedacht sein, das Schweißgerät zangenartig auszubilden, mit zwei aufeinander zu und voneinander weg bewegbaren Zangenschenkeln. Jedoch ist es kostengünstiger und daher bevorzugt, wenn ein Gehäuse des Elektromotors mit einem ortsfesten Schweißarm mittelbar, etwa über ein gemeinsames Gestell, oder unmittelbar gekoppelt ist und ein relativ zum Gehäuse bewegliches Bewegungsausgabeteil des Elektromotors mit einem relativ zum ortsfesten Schweißarm beweglichen Schweißarm gekoppelt ist. In diesem Falle bleibt ein Schweißarm ortsfest und der andere wird auf diesen zu und von diesem weg bewegt. Wie eingangs geschildert wurde, ist der numerisch gesteuerte Elektromotor in der Lage, den Schweißspalt in einem breiten Parameterbereich zu verändern, etwa mit unterschiedlichen Bewegungsgeschwindigkeiten oder/und unterschiedlichen Ausgangsdrehmomenten, unterschiedlichen Geschwindigkeits-Zeit-Verläufen usw. Dieses Potential kann dann besonders vorteilhaft genutzt werden, wenn das Schweißgerät eine Schweißsteuerung zur Steuerung des Schweißstromflusses durch die Schweißelektroden und eine Motorsteuerung zur Steuerung der Bewegung des Bewegungsausgabeteils des Elektromotors umfasst, wobei die Motorsteuerung derart ausgebildet ist und mit der Schweißsteuerung zusammenwirkt, dass der Motor in Abhängigkeit vom zeitlichen Verlauf des Schweißstroms zur Nachsetzbewegung angewiesen wird. Im Gegensatz zu einem Schweißgerät mit federvorgespannten Schweißarmen kann so die Nachsetzbewegung der Schweißelektroden durch den Motor passend zur jeweils vorliegenden Schweißanwendung gewählt werden. Dabei sei ausdrücklich darauf hingewiesen, dass der zeitliche Verlauf des Schweißstroms nicht der einzige, sondern auch ein Parameter ist, in dessen Abhängigkeit der Motor zur Nachsetzbewegung angewiesen wird. In der Regel besteht jedoch ein enger Zusammenhang zwischen dem Schweißstrom und dem Abschmelzverhalten von am Kleinteil vorgesehenen Materialansammlungen, wie etwa Schweißnoppen, so dass eine abhängig vom zeitlichen Verlauf des Schweißstroms gesteuerte Nachsetzbewegung eine erhebliche Bedeutung für eine gute Schweißverbindungsqualität hat.

Genauer kann die Motorsteuerung derart ausgebildet sein, dass sie den Motor bereits zur Nachsetzbewegung anweist, bevor der Schweißstrom eine Stärke erreicht hat, welche ein Aufschmelzen von Material am Kleinteil oder/und am Kleinteilträger führt. Durch die voreilende Anweisung des Motors zur Nachsetzbewegung kann das Ansprechverhalten oder/und die Trägheit des nummerisch steuerbaren Elektromotors berücksichtigt und kompensiert werden, so dass eine Nachsetzbewegung möglichst exakt dann einsetzt, wenn auch der Aufschmelzvorgang am Kleinteil oder/und am Kleinteilträger beginnt.

Dabei sind das Ansprechverhalten oder/und eine Trägheit des Motors nur Beispiele für charakteristische Steuergrößen des Motors, welche zur Bestimmung des Zeitpunkts der Bewegungsanweisung oder/und zur Bestimmung des Bewegungsverlaufs des Motors durch die Motorsteuerung herangezogen werden können. Derartige charakteristische Steuergrößen können für die Motorsteuerung präsent in einem Speicher hinterlegt sein, auf welchen die Motorsteuerung Zugriff hat. In diesem Speicher können auch weitere Daten hinterlegt sein, etwa die zu bewegende Masse des wenigstens einen Schweißarms. Diese charakteristischen Größen können weiterhin für unterschiedliche Kleinteile oder/und Kleinteilträger hinterlegt sein, so dass das Schweißgerät sehr einfach an ein Verschweißen unterschiedlicher Kleinteile oder/und Kleinteilträger anpassbar ist.

Besonders bevorzugt handelt es sich bei dem oben genannten Schweißgerät um ein Mutter-Schweißgerät, welches dazu dient, Muttern, insbesondere Schweißmuttern nach DIN, auf einer Platte oder einem sonstigen Mutterträger anzuschweißen.

Bei Mutter-Schweißgeräten liegt eine besondere technische Herausforderung in der möglichst positionsgenauen Anordnung der Mutter im Schweißspalt zur Verschweißung mit dem Mutterträger. Zwischen den Schweißelektroden herrscht ein verhältnismäßig großes elektrisches und magnetisches Feld, welches auf metallische Muttern, die während der Zuführung in den Schweißspalt einen bewegten elektrischen Leiter darstellen, Kräfte ausübt. Diese induzierten Kräfte können zu einer Fehlanordnung der Mutter im Schweißspalt führen. Zur Vermeidung einer solchen Fehlanordnung weist das Schweißgerät vorzugsweise eine Positioniereinheit zur Aufnahme einer zu verschweißenden Mutter im Schweißspalt auf, wobei die Positioniereinheit zwei einen Fangraum zwischen sich definierende Klemmelemente umfasst, welche jeweils um eine Klemmdrehachse zwischen einer Mutter-Ladestellung und einer Mutter-Haltestellung drehbar in einer Klemmelementaufnahme aufgenommen sind, wobei die Klemmdrehachsen im Wesentlichen parallel sind.

Die Mutter, welche unter Kraft, wie etwa Gewichtskraft oder einer sonstigen, sie in den Schweißspalt verschiebenden Kraft, sich dem Fangraum nähert, tritt in diesen ein und stößt dabei auf die entweder lose und unbelastet oder in die Mutter-Ladestellung vorgespannt angeordneten drehbaren Klemmelemente, welche durch die Wucht der auftreffenden Mutter in die Mutter-Ladestellung verschwenkt werden, falls sie sich nicht ohnehin schon in dieser befinden. In dieser Mutter-Ladestellung dringt die Mutter tief in den Fangraum ein, wobei die kinetische Energie der Mutter zu einem möglichst großen Teil durch Stoß an die Klemmelemente übertragen wird und durch eine stoßinduzierte Drehung der Klemmelemente und der dabei erzeugten Reibung zwischen den Klemmelementen und der Klemmelementaufnahme dissipiert wird. Gleichzeitig werden die Klemmelemente durch die Drehbewegung in die Mutter-Haltestellung bewegt, in welcher sie eine Haltekraft auf die Mutter im Fangraum ausüben. In der Mutter-Haltestellung halten die Klemmelemente die Mutter in der gewünschten Position geklemmt.

Aus Gründen einer möglichst einfachen Herstellung ist es vorteilhaft, wenn die Klemmelemente im Wesentlichen spiegelsymmetrisch bezogen auf eine Symmetrieebene angeordnet und ausgebildet sind, welche eine Ladebewegungsrichtung einer in die Positioniereinheit zu ladenden Mutter und eine Längsmittelachse einer in der Positioniereinheit gehaltenen Mutter enthält. Diese Symmetrie ist außerdem für eine symmetrische Krafteinwirkung der Klemmelemente auf die zu haltende Mutter vorteilhaft.

Um ein unerwünschtes übermäßiges Verdrehen der gemäß einer Ausführungsform nur lose in der Klemmelementaufnahme aufgenommenen Klemmelemente zu verhindern, sind vorteilhafterweise an der Positioniereinheit Drehbegrenzungsmittel vorgesehen, welche eine Drehbewegung der Klemmelemente winkelmäßig begrenzen. Im einfachsten Fall können diese Drehbegrenzungsmittel durch einen Vorsprung an einem Bauteil: Klemmelement oder Klemmelementaufnahme, und einer Ausnehmung am jeweils anderen Bauteil: Klemmelementaufnahme oder Klemmelement, gebildet sein, in welche der Vorsprung hineinragt. Die Längsenden der Ausnehmung bilden dann Anschläge, an welche der Vorsprung zur Anlage kommt. Zur erleichterten Fertigung und Montage ist die Ausnehmung vorteilhafterweise an den Klemmelementen und der Vorsprung an der Klemmelementaufnahme vorgesehen.

Alternativ kann gemäß einer vorteilhaften Weiterbildung der Erfindung die Ausnehmung und der Vorsprung dauerhaft aneinander anliegend angeordnet sein, wobei dann der Vorsprung oder/und die am Vorsprung anliegende Ausnehmung aus einem weichelastischen Material gebildet ist, wie etwa Gummi. Eine derartige Ausbildung der Drehbegrenzungsmittel hat den Vorteil, dass durch das weichelastische Material eine rückstellende Kraft auf die Klemmelemente wirkt, so dass diese in die Mutter-Ladestellung vorgespannt sind. Aufgrund der so bereitgestellten Materialelastizität kann zusätzlich Klemmkraft auf eine im Fangraum befindliche Mutter ausgeübt werden. Bei der Verlagerung der Klemmelemente in die Mutter-Haltestellung wird dabei das aus dem weichelastischen Material hergestellte Bauteil der Drehbegrenzungsmittel: Vorsprung oder/und Ausnehmung, verformt, was hilft, einen Bewegungsstoß der im Fangraum eintreffenden Mutter weiter abzudämpfen.

Mit "weichelastisch" soll ausgesagt sein, dass die von einer zu ladenden Mutter ausgeübten Kräfte bereits zu einer deutlichen Verformung des Materials führen. Der Begriff "weichelastisch" soll gerade eine Abgrenzung gegenüber harten Materialien, wie etwa Metallen, bilden, die selbstverständlich auch als elastisch anzusehen sind, bei denen jedoch die im Fangraum eintreffende Mutter keine signifikante Verformung bewirkt.

Zur möglichst genauen Positionierung der Mutter im Fangraum im Schweißspalt kann jedes Klemmelement wenigstens eine Anlagefläche, vorzugsweise eine Mehrzahl von Anlageflächen, aufweisen, welche dazu ausgebildet ist, bei in der Positioniereinheit gehaltener Mutter an Werkzeugangriffsflächen am Außenumfang der Mutter in Anlageeingriff zu sein. Die wenigstens eine Anlagefläche kann vorteilhaft auch als Stoßfläche zur Übertragung von kinetischer Enegie von der Mutter auf die Klemmelemente dienen.

Um die Mutter besonders sicher im Fangraum zu halten und ein Herausrutschen der Mutter entgegen der Laderichtung aus dem Fangraum zu verhindern, etwa durch ein Zurückprallen, weil nicht die gesamte kinetische Energie der Mutter durch ein Verdrehen der Klemmelemente dissipiert werden konnte, kann wenigstens ein, vorzugsweise jedoch jedes Klemmelement, an der Seite einer Fangraumeintrittsöffnung einen Hintergriffsvorsprung aufweisen, welcher in der Mutter-Haltestellung der Klemmelemente die Mutter zur Verhinderung einer Mutterbewegung entgegen der Mutter-Laderichtung hintergreift, wobei der Hintergriffsvorsprung derart bemessen ist, dass die Weite der Fangraumeintrittsöffnung in der Mutter-Ladestellung wenigstens der orthogonal zu einer Werkzeugangriffsfläche gemessenen Breite der zu verschweißenden Mutter entspricht.

Ein unerwünschtes Verlagern eines Klemmelements aus der Klemmelementaufnahme heraus, etwa dann, wenn sich im Fangraum keine Mutter befindet, kann dadurch verhindert werden, dass ein Klemmelement, vorzugsweise beide Klemmelemente, einen zylindrischen Umfangswandabschnitt aufweist, welchen die Klemmelementaufnahme um mehr als 180°, vorzugsweise 200° bis 240°, besonders bevorzugt etwa 220°, umgreift.

Die Klemmelemente sind vorzugsweise aus möglichst verschleißfestem, nicht ferromagnetischem Material gebildet. Jedoch kann auch ferromagnetisches oder leicht ferromagnetisches Material verwendet werden, da eine eventuelle Magnetisierung der Klemmelemente durch die im Schweißspalt regelmäßig auftretende große Wärme reduziert wird. Als Materialien kommen beispielsweise gehärteter Stahl, Hartmetall, thermisch beständiger Kunststoff, besonders bevorzugt Titan, oder auch Buntmetalle in Betracht.

Die Positioniereinheit ist gemäß einer Weiterbildung der Erfindung vorzugsweise als gesonderte vormontierte oder vormontierbare Baugruppe ausgebildet, welche an einem Schweißarm des Schweißgeräts anordenbar ist. Hierzu kann die Klemmelementaufnahme Verrastungsmöglichkeiten, wie etwa federvorbelastete Kugeln und dgl., aufweisen, um die Positioniereinheit in einfacher Weise am Schweißarm anbringen und dort fixieren zu können. An der Klemmelementaufnahme und am Schweißarm können korrespondierende Führungsausbildungen, wie etwa Nuten und Vorsprünge, vorgesehen sein, so dass die Positioniereinheit einfach auf den Schweißarm aufgeschoben oder aufgesteckt werden kann.

Alternativ hierzu kann die Klemmelementaufnahme in eine Bewegungsrichtung beweglich an einem der Schweißarme vorgesehen sein. Diese Bewegbarkeit kann zum weiteren Abbau von kinetischer Energie der Mutter über die durch die Klemmelemente dissipierte Energie hinaus genutzt werden. Die Aufnahme von kinetischer Energie der Mutter durch die Klemmelementaufnahme funktioniert dabei umso besser, je mehr die Bewegungsrichtung der Klemmelementaufnahme und die Mutter-Laderichtung übereinstimmen. Daher weist die Mutter-Laderichtung zumindest eine in die Bewegungsrichtung der Klemmelementaufnahme weisende Richtungskomponente auf. Vorzugsweise sind die beiden Richtungen identisch.

Um sicherzustellen, dass die relativ zu einem Schweißarm oder zu einer Schweißelektrode bewegliche Klemmelementaufnahme nach einer weiteren Absorption von Bewegungsenergie der Mutter jene in der gewünschten Stellung hält, in welcher sie an einen Mutterträger aufgeschweißt werden soll, kann die Klemmelementaufnahme in eine vorbestimmte Stellung relativ zu einer der Schweißelektroden vorgespannt sein. Die Vorspannung kann in einem besonders einfachen Fall durch ein Federelement, insbesondere eine Schraubendruckfeder und dgl., bewirkt sein.

Die vorliegende Erfindung wird im Folgenden anhand der beiliegenden Zeichnungen näher erläutert. Es stellt dar:
- Fig. 1: eine Seitenansicht einer Ausführungsform eines erfindungsgemäßen Schweißgeräts,
- Fig. 2: eine Längsschnittansicht des Schweißgeräts von Fig. 1 bei Betrachtung von der Seite,
- Fig. 3: eine Querschnittsansicht des Schweißgeräts der Fig. 1 und 2 längs der Ebene 111-111 von Fig. 2,
- Fig. 4: ein grob schematisches Diagramm zur Veranschaulichung zeitlicher Abfolgen in der Schweiß- und Motorsteuerung des Schweißgeräts der Fig. 1 bis 3,
- Fig. 5: eine Längsschnittansicht durch die Positioniereinheit 28 längs der Ebene V-V in Fig. 6,
- Fig. 6: eine Draufsicht auf die Positioniereinheit 28, und
- Fig. 7: eine Draufsicht auf die Positioniereinheit 28 von Fig. 6 bei geladener Schweißmutter.

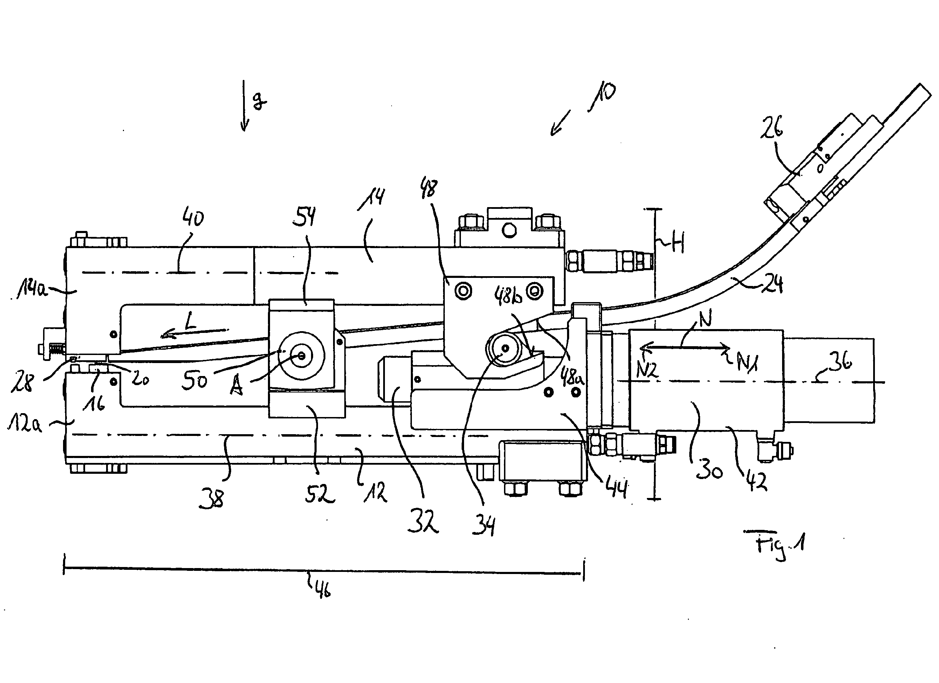

In Fig. 1 ist ein erfindungsgemäßes Schweißgerät allgemein mit 10 bezeichnet. Das Schweißgerät 10 umfasst einen ortsfesten Schweißarm 12 und einen um eine zur Zeichenebene der Fig. 1 orthogonale Schwenkachse A relativ zum ortsfesten Schweißarm 12 verschwenkbaren beweglichen Schweißarm 14.

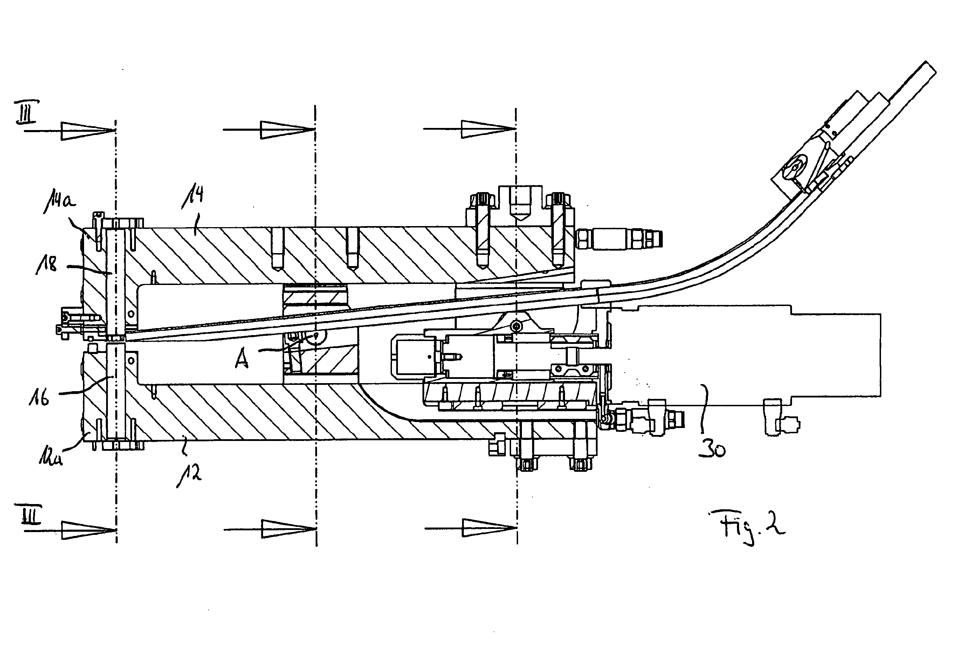

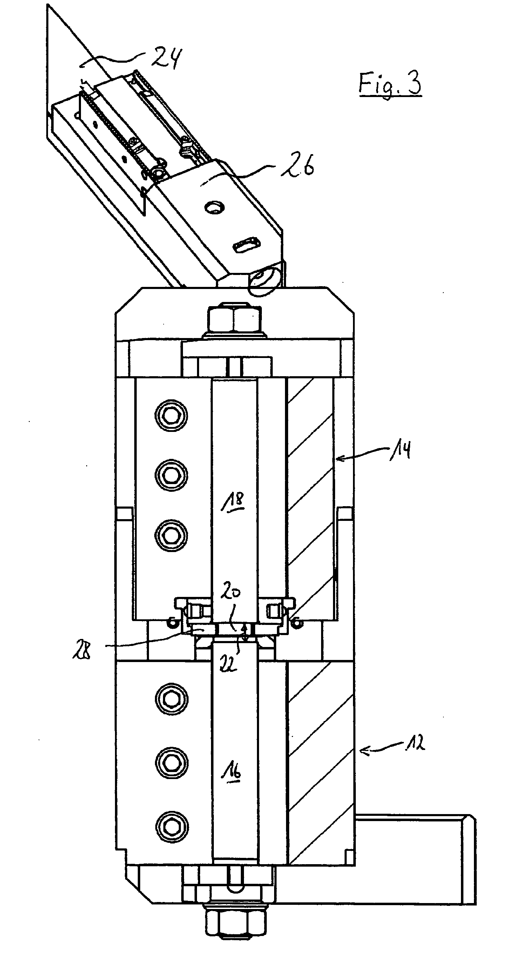

Die Schweißarme 12 und 14 weisen an ihren Längsenden 12a und 14a Schweißelektroden 16 und 18 auf (siehe auch Fig. 2 und 3). Zwischen den Schweißelektroden 16 und 18 ist ein Schweißspalt 20 mit veränderlicher Spaltweite 22 vorgesehen (siehe Fig. 3).

In den Schweißspalt 20 wird über eine bezüglich der Schwerkraft g schiefe Bahn 24 eine in den Fig. 1 bis 3 nicht dargestellte Schweißmutter geladen. Dieser Ladevorgang wird unterstützt durch einen pneumatischen Vereinzeler 26. Der pneumatische Vereinzeler 26 erteilt einer zu ladenden Mutter einen Luftdruckstoß und beschleunigt sie so in der Bahn 24 zum Schweißspalt 20 hin.

Am schweißspaltnahen Ende des Längsendes 14a des beweglichen Schweißarms 14 ist eine Positioniereinrichtung 28 vorgesehen, welche die längs der Laderichtung L ankommende Mutter aufnimmt und festhält.

Ein Mutterträger, etwa ein Blech, wird zwischen der unteren Schweißelektrode 16 und der Positioniereinheit 28 in den Schweißspalt 20 etwa in einer Richtung orthogonal zur Zeichenebene der Fig. 1 transportiert.

Der bewegliche Schweißarm 14 ist zur Schwenkbewegung um die Schwenkachse A durch einen nummerisch steuerbaren Gleichstrom-Servomotor 30 antreibbar. Der Elektromotor 30 ist mit einer nicht dargestellten Steuerung verbunden, welche ihn zur Bewegungsausgabe anweist. Hierzu ist der Elektromotor 30 weiterhin mit Leitungen zur Signalübertragung und zur Energieversorgung verbunden.

Die Bewegungsausgabe des nummerisch steuerbaren Elektromotors 30 ist mit einem Spindelmechanismus 32 gekoppelt, welcher eine Drehbewegung einer nicht dargestellten Motorwelle in eine lineare Bewegung eines Nockens 34 umsetzt. Durch Betätigung des Elektromotors 30 ist der Nocken 34 in Form einer Stützrolle in die durch den Doppelpfeil N bezeichneten Richtungen bewegbar.

Der Elektromotor 30 erstreckt sich längs einer Motorlängsachse 36, welche mit der Drehachse der nicht dargestellten Motorwelle übereinstimmt. Der Doppelpfeil N ist parallel zur Motorlängsachse 36.

Ebenfalls dargestellt in Fig. 1 ist die Schweißarmlängsachse 38 des ortsfesten Schweißarms 12 sowie die Schweißarmlängsachse 40 des beweglichen Schweißarms 14. Beide Schweißarmlängsachsen 38 und 40 liegen in der Zeichenebene von Fig. 1 bzw. parallel dazu.

Die Motorlängsachse 36 ist im Wesentlichen parallel zur Schweißarmlängsachse des ortsfesten Schweißarms 38, mit welchem das Gehäuse 42 des Motors 30 über eine Halterung 44 im Wesentlichen starr verbunden ist.

Darüber hinaus sind die Schweißarmlängsachsen 38 und 40 des ortsfesten bzw. des beweglichen Schweißarms "quasi-parallel" zueinander, d. h. die Neigung der Schweißarmlängsachse 40 bezüglich der Schweißarmlängsachse 38 ist so gering, dass ein Schnitt- oder Kreuzungspunkt der beiden Schweißarmlängsachsen weit entfernt von den Schweißelektroden 16 und 18 liegt. Mit anderen Worten: der Schwenkwinkelbereich, in welchem der bewegliche Schweißarm 14 relativ zum ortsfesten Schweißarm 12 verschwenkbar ist, umfasst eine parallele Anordnung der Schweißarmlängsachsen 38 und 40 und weist einen so geringen Schwenkwinkelbereich auf, dass im Bereich der tatsächlichen Erstreckungslänge 46 der Schweißarme 12 und 14 die Schweißarme 12 und 14 ungeachtet der Schwenkstellung des beweglichen Schweißarms 14 als nahezu parallel betrachtet werden können. Der Schwenkwinkelbereich kann etwa kleiner oder gleich 10° sein.

Durch diese Bauart wird ein Schweißgerät 10 mit äußerst niedriger Bauhöhe H erhalten, so dass das Schweißgerät 10 ohne weiteres zwischen Stationen einer Presse einer Fertigungsstraße anordenbar ist. Dies hat den Vorteil, dass gleichzeitig mit dem Verschweißen einer Mutter und eines Mutterträgers der Mutterträger von benachbarten Bearbeitungsstationen umgeformt werden kann.

Der Nocken 34 wirkt mit einer mit dem beweglichen Schweißarm 14 im Wesentlichen starr verbundenen Kurvenscheibe 48 zusammen und rollt dort zwischen zwei entgegengesetzten Nockenbahnen 48a und 48b ab. Die parallelen Nockenbahnen 48a und 48b verhindern wechselseitig ein Abheben des Nockens 34 von der jeweils anderen Nockenbahn 48a und 48b und sind überdies derart gestaltet, dass eine Nockenbewegung 34 in Richtung der Pfeilspitze N1 des Doppelpfeils N zu einer Vergrößerung des Schweißspalts 20 führt und dass eine Bewegung des Nockens 34 in Richtung der Pfeilspitze N2 des Doppelpfeils N zu einer Verringerung der Schweißspaltweite 22 des Schweißspalts 20 führt.

Die Verschwenkbarkeit des beweglichen Schweißarms 14 relativ zum ortsfesten Schweißarm 12 wird sichergestellt durch zwei über ein Wälzlager 50 gekoppelte Halterungen 52 und 54, von welchen die ortsfeste Halterung 52 mit dem ortsfesten Schweißarm 12 im Wesentlichen starr verbunden ist und die bewegliche Halterung 54 im Wesentlichen starr mit dem beweglichen Schweißarm 14 verbunden ist.

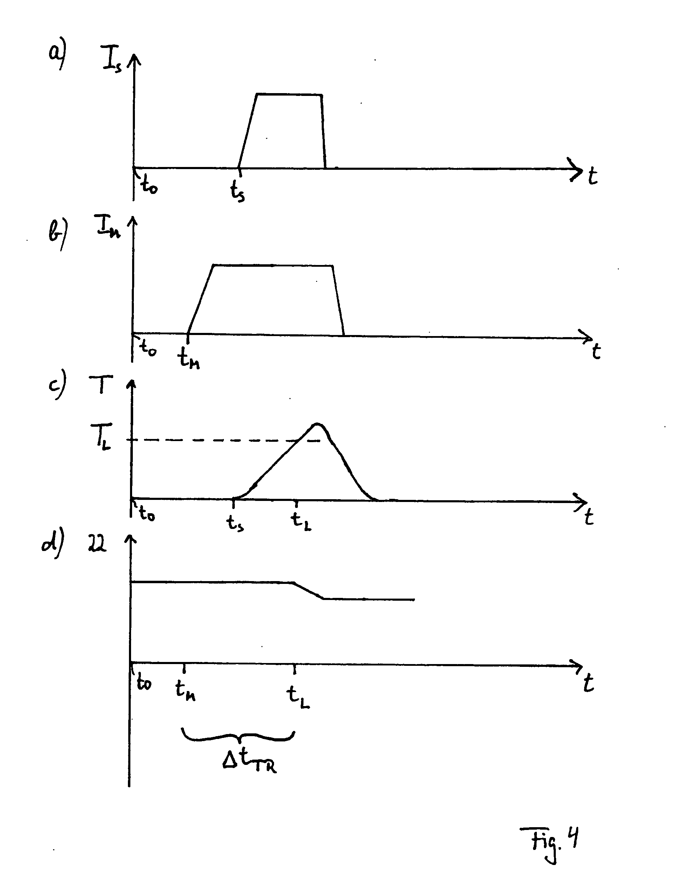

In Fig. 4 ist in vier Teilfiguren 4a bis 4d eine zeitliche Signalfolge grob schematisch zur Veranschaulichung der Steuerung des Schweißgeräts dargestellt. Die Fig. 4a zeigt grob schematisch den Verlauf des Schweißstroms I_{S}. Die Fig. 4b zeigt grob schematisch den Verlauf des Motorstroms I_{M}. Die Fig. 4c zeigt grob schematisch die Temperatur T von zum Abschmelzen vorgesehenen Schweißnoppen an einer zu verschweißenden Mutter. Fig. 4d zeigt grob schematisch die Schweißspaltweite 22. Zur Zeit t₀ befindet sich das Schweißgerät 10 in der Schweißvorbereitungsstellung, d. h. die Schweißelektroden 16 und 18 halten zwischen sich im Schweißspalt 20 eine zu verschweißende Mutter und einen Mutterträger geklemmt, auf welchen die Mutter aufzuschweißen ist. Es sei noch einmal ausdrücklich betont, dass Fig. 4 nicht die tatsächlichen zeitlichen Verläufe der einzelnen Parameter wiedergeben soll, sondern vielmehr die zeitliche Abfolgebeziehung dieser Parameter untereinander veranschaulichen soll.

Zum Zeitpunkt t_{S} beginnt die Schweißsteuerung, den Schweißstrom l_{S} durch die Schweißelektroden 16 und 18 zu erhöhen. Nach einem raschen Anstieg des Schweißstroms I_{S} hält die Schweißsteuerung den Schweißstrom I_{S} auf einem vorbestimmten Wert.

Durch den zum Zeitpunkt t_{S} ansteigenden Schweißstrom beginnt zum Zeitpunkt t_{S} ebenfalls die Temperatur T der Schweißnoppen an der zu verschweißenden Mutter im Schweißspalt 20 anzusteigen. Zum Zeitpunkt t_{L} erreicht die Temperatur T der Schweißnoppen die Schmelztemperatur T_{L} und diese beginnen abzuschmelzen.

Anhand von Experimenten ist ermittelt worden, dass der Motor eine Trägheitszeitkonstante von Δt_{TR} aufweist. Die Trägheitszeitkonstante Δt_{TR} bezeichnet dabei eine Totzeit zwischen einer Erhöhung des Motorstroms und einer Auswirkung der Motorstromerhöhung auf die Bewegung der Motorwelle. Weiterhin ist die Zeitspanne t_{L} - t_{S} aus Experimenten bekannt, welche für die Erwärmung der Schweißnoppen vom Beginn der Erhöhung des Schweißstroms bis zum Beginn des Abschmelzvorgangs der Schweißnoppen benötigt wird. Aus diesem Grunde wird bereits zu einem um Δt_{TR} vor t_{L} liegenden Zeitpunkt t_{M} unter Berücksichtigung des Ansprechverhaltens des Elektromotors 30 von der Motorsteuerung der Motorstrom I_{M} bis zu einem vorbestimmten Betriebsstromwert erhöht. Der Zeitpunkt t_{M} kann dabei ohne weiteres vor dem Zeitpunkt tₛ liegen, so dass der Motor bereits zur Bewegungsausgabe angewiesen wird, bevor überhaupt ein Schweißstrom durch das Schweißgut durchgeleitet wird.

Da der Motor 30 unter Berücksichtigung seiner charakteristischen Motorträgheit Δt_{TR} zur Ausgabe einer Bewegung angewiesen wird, kann der bewegliche Schweißarm 14 im Wesentlichen genau zum Zeitpunkt t_{L} auf den ortsfesten Schweißarm 12 zu bewegt werden, so dass eine Verringerung des Schweißspalts 22 wie gewünscht genau mit dem Einsetzen des Schmelzvorgangs an der Schweißnoppe der zu verschweißenden Mutter beginnt. Die Folge ist, dass durch die nahezu gleichzeitig mit dem Aufschmelzvorgang einsetzende Motorwellen- bzw. Schweißarmbewegung und der damit verbundenen Schweißspaltverringerung kein aufgeschmolzenes Material aus dem Schweißspalt austreten kann und somit nahezu das gesamte Material der Schweißnoppe zur Erzeugung einer Schweißverbindung zur Verfügung steht. Damit kann nicht nur eine Taktzeitverkürzung, sondern gleichzeitig auch eine Qualitätsverbesserung der bei nun kürzerer Taktzeit erzeugten Verschweißung erzielt werden.

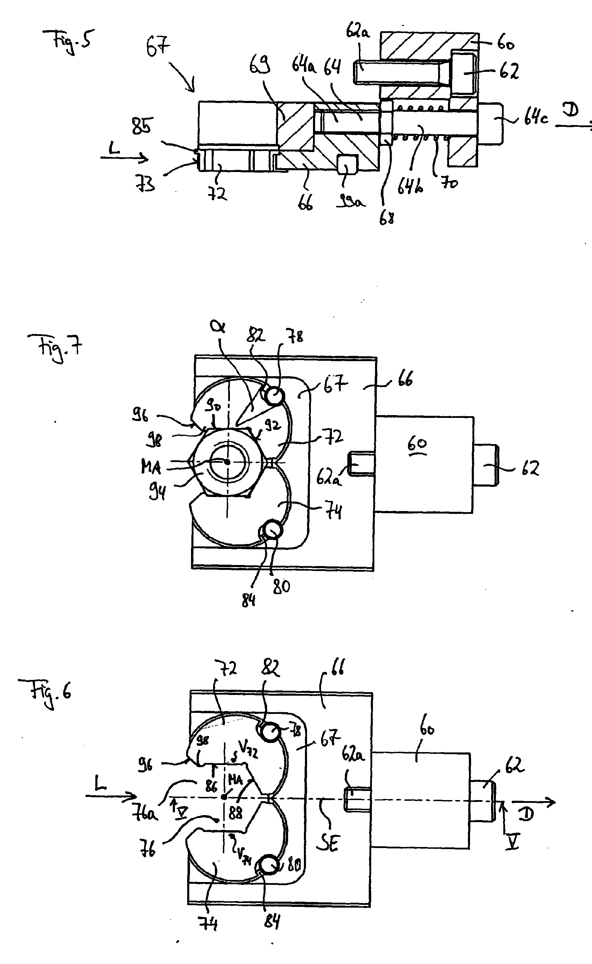

Die am Längsende 14a des Schweißarms 14 vorgesehene Positioniereinheit 28 ist ausführlich in den Fig. 5 bis 7 dargestellt. Wie in der Längsschnittansicht von Fig. 5 zu erkennen ist, weist die Positioniereinheit 28 ein Befestigungsstück 60 auf, welches von einer Befestigungsschraube 62 durchsetzt ist, die mit ihrem schraubenkopffernen Gewindelängsende 62a in den Schweißarm 14 eingedreht ist. Dadurch ist das Befestigungsstück 60 durch die Befestigungsschraube 62 an den Schweißarm 14 angeklemmt.

Das Befestigungsstück 60 wird darüber hinaus von einer Führungsschraube 64 durchsetzt, deren schraubenkopffernes Längsende 64a in eine Klemmelementaufnahme 66 eingedreht ist. Die Befestigung der Klemmelementaufnahme 66 an der Führungsschraube 64 ist durch eine Kontermutter 68 gesichert. Genauer ist das Befestigungsstück 60 durch einen gewindefreien Schaftabschnitt 64b der Schraube 64 durchsetzt, welcher weiterhin von einer vorgespannten Schraubendruckfeder 70 umgeben ist, die zwischen der Kontermutter 68 und einem von der Führungsschraube 64 durchsetzten Abschnitt des Befestigungsstücks 60 vorgesehen ist. Durch diese Anordnung wird der Schraubenkopf 64c der Führungsschraube 64 von der Feder 70 gegen den von der Führungsschraube 64b durchsetzten Abschnitt des Befestigungsstücks 60 in Anlage gedrückt. Jedoch ist die starr mit der Führungsschraube 64 verbundene Klemmelementaufnahme 66 in Richtung des Pfeils D gegen die Kraft der Feder 70 bewegbar. Somit kann ein Stoß, welcher von einer in Laderichtung L in die Positioniereinheit 28 eintretenden Mutter auf die beweglichen Teile der Positioniereinheit 28 ausgeübt wird, durch den Federweg in Richtung des Pfeils D aufgenommen und abgedämpft werden. Die Dämpfungsrichtung D und die Laderichtung L sind vorzugsweise parallel oder sogar kollinear.

Von der Klemmelementaufnahme 66 sind zwei Klemmelemente 72 und 74 schwenkbar aufgenommen. Die gesamte Positioniereinheit ist im Wesentlichen spiegelsymmetrisch zu einer zur Zeichenebene der Fig. 6 orthogonalen Symmetrieebene SE ausgebildet. Wie in Fig. 6 zu sehen ist, verläuft die Symmetrieebene SE in Laderichtung L und enthält die Mittelachse einer MA einer im Fangraum 76 zwischen den Klemmelementen 72 und 74 einzufangenden Mutter.

In eine Ausnehmung 67 der Klemmelementaufnahme 66 ist ein Deckelelement 69 abnehmbar eingeklipst, um ein Abheben der Klemmelemente 72 und 74 von der Klemmelementaufnahme 66 zu verhindern.

Die Verdrehachsen V₇₂ und V₇₄ der Klemmelemente 72 bzw. 74 sind orthogonal zur Zeichenebene der Fig. 6 orientiert und verlaufen parallel zueinander.

In der Klemmelementaufnahme 66 sind Stifte 78 und 80 vorgesehen, welche in Umfangslanglochausnehmungen 82 und 84 an den Klemmelementen 72 und 74 hineinragen. Die Länge der Umfangslanglöcher 82 und 84 definiert dabei den Schwenkwinkelbereich α der Klemmelemente 72 und 74 um die Verschwenkachsen V₇₂ und V₇₄. In jeder Endstellung liegen dabei die Stifte 78 bzw. 80 an Längsenden der zugeordneten Langlöcher 82 bzw. 84 an.

Die Umfangslöcher 82 und 84 können gemäß einer alternativen Ausführungsform der vorliegenden Erfindung die Stifte 78 bzw. 80 flächig anliegend umgeben. In diesem Falle können vorzugsweise die Stifte 78 und 80 aus weichelastischem Material, wie etwa Gummi, hergestellt sein, so dass sie eine Verformung bereits bei Kräften gestatten, wie sie beim Einfangen von Muttern im Fangraum 76 auftreten. In diesem Falle führt das Auftreffen einer Mutter im Fangraum zu einer Veformung der Stifte 78 und 80 durch eine Verstellung der Klemmelemente von der Mutter-Ladestellung in die Mutter-Haltestellung. Durch die Materialelastizität kann dann in der Mutter-Haltestellung zusätzliche Klemmkraft auf die im Fangraum 76 gehaltene Mutter ausgeübt werden. Nach einer Entnahme der Mutter 76 aus dem Fangraum 76 bewirkt die Verformung der Stifte 78 und 80 eine rückstellende Kraft auf die Klemmelemente 72 und 74, so dass diese in die Mutter-Ladestellung zurückgestellt werden. Ein weiterer Vorteil der zuletzt geschilderten Alternative liegt somit auch in der definierten Stellung der Klemmelemente 72 und 74 zu Beginn eines Mutter-Ladevorgangs. Anstelle der oder zusätzlich zu den Stiften 78 und 80 können auch die Umfangslöcher 82 und 84 durch weichelastisches Material begrenzt sein. Aufgrund des höheren Fertigungsaufwandes ist dies jedoch nicht bevorzugt.

In Fig. 6 sind die Klemmelemente, welche lose auf einem Bund 85 ruhend in die Klemmelementaufnahme 66 eingelegt sind und unter keinerlei Vorspannung stehen, in einer Bereitschaftsstellung dargestellt.

Das Klemmelement 72 weist zwei Anlageflächen 86 und 88 auf, welche bei im Fangraum 76 vorhandener Mutter (s. Fig. 7) an entsprechenden Werkzeugangriffsflächen 90 und 92 der zu haltenden Mutter 94 zur Anlage kommen. Die hier gegebene Beschreibung des Klemmelements 72 ist aufgrund der Symmetrie zwischen beiden Klemmelementen 72 und 74 auch auf das Klemmelement 74 anwendbar, dessen Beschreibung aus diesem Grunde weggelassen wird.

Das Klemmelement 72 weist an der Fangmaulöffnung 76a eine Einführschräge 96 auf, welche in Laderichtung L in einen Hintergriffsvorsprung 98 mündet. Die Hintergriffsvorsprünge 98 der Klemmelemente 72 und 74 sind dabei derart bemessen, dass die lichte Weite zwischen ihnen in der Mutter-Ladestellung der Klemmelemente 72 und 74 größer oder gleich der Breite der Mutter 94 ist, wobei die Breite der Mutter 94 orthogonal etwa zur Werkzeugangriffsfläche 90 gemessen ist.

Ein Ladevorgang einer Mutter 94 in die Positioniereinheit 28 erfolgt dabei wie folgt:

Die Mutter 94 wird mit Luftdruck durch den pneumatischen Vereinzeler 26 entlang der Bahn 24 in Laderichtung L auf die Fangmaulöffnung 76a getrieben. Vorzugsweise befindet sie sich bereits in der Drehstellung, in welcher sie später im Fangraum 76 zwischen den Klemmelementen 72 und 74 gehalten werden soll. Dies kann durch geeignete seitliche Begrenzung der Bahn 24 erreicht werden.

Bei Annäherung der Mutter 94 an die Fangmaulöffnung 76a drückt die Mutter aufgrund der Einführschräge 96, welche bis zum Hintergriffsvorsprung 98 reicht, die Fangmaulöffnung 26a auf, d. h. das Klemmelement 72 wird im Uhrzeigersinn und das Klemmelement 74 im Gegenuhrzeigersinn verschwenkt.

Dabei wird bereits ein Teil der Bewegungsenergie der Mutter 94 von dieser an die Klemmelemente 72 und 74 übertragen und von letzteren dissipiert. Die Mutter dringt daraufhin tiefer in den Fangraum 76 ein, bis sie mit den Werkzeugangriffsflächen 92 an die Anlageflächen 88 anstößt. Daraufhin werden die Klemmelemente 72 und 74 im Sinne einer Verkleinerung der Fangmaulöffnung 76a stoßinduziert zum Verschwenken angetrieben. Dabei gibt die Mutter 94 einen weiteren Teil ihrer kinetischen Energie an die Klemmelemente 72 und 74 ab, von welchen das Klemmelement 72 nun im Gegenuhrzeigersinn und das Klemmelement 74 im Uhrzeigersinn verschwenkt. Idealerweise ist die Geschwindigkeit der Mutter 94 unter Berücksichtigung ihrer Masse und der Massen der Klemmelemente 72 und 74 derart bemessen, dass die Mutter 94 nach dem Anstoßen an die Anlageflächen 88 vollständig abgebremst ist. Restbewegungsenergie kann jedoch durch das Stoßdämpfersystem aufgenommen werden, welches von der Führungsschraube 64 und der Schraubendruckfeder 70 gebildet ist.

Nach dem zweiten Verschwenkvorgang gelangen die Klemmelemente 72 und 74 in die Mutter-Haltestellung, welche in Fig. 7 dargestellt ist. Die Anlageflächen 86 und 88 der Klemmelemente 72 und 74 liegen an den Werkzeugangriffsflächen 90 und 92 an und die Hintergriffsvorsprünge 98 hintergreifen die Mutter 94 derart, dass diese formschlüssig im Fangraum 76 gehalten ist und nicht entgegen der Laderichtung L aus dem Fangraum 76 wieder austreten kann.

In dieser Stellung wird die Mutter 94 mit einem zwischen ihr und der unteren Elektrode 16 liegenden Mutterträger verschweißt. Nach dem Schweißvorgang wird die Schweißspaltweite 22 durch entsprechendes Betreiben des Motors 30 so weit erhöht, dass die Positioniereinheit 28 von der Mutter 94 abgehoben wird, welche am Mutterträger verschweißt verbleibt. Der nun fertiggestellte Mutterträger wird weitertransportiert und durch einen neuen Mutterträger ohne Mutter ersetzt. Daraufhin wird die Schweißspaltweite 22 des Schweißspalts 20 wieder verringert, eine neue Mutter 94 wird in die Positioniereinheit 28 geladen, die Schweißspaltweite 22 des Schweißspalts 20 wird so weit verringert, dass die Schweißelektroden 16 und 18 jeweils am Mutterträger bzw. der Mutter 94 sowie die Mutter 94 am Mutterträger anliegen, so dass eine elektrische Leitung zwischen den Schweißelektroden 16 und 18 ohne Luftspaltstrecke möglich ist.

Abschließend wird noch hingewiesen auf ein Isolatorstück 99a, etwa aus Keramik, welches zusammen mit einem am ortsfesten Schweißarm 12 vorgesehenen Isolatorgegenstück 99b verhindert, dass auch dann unerwünschterweise ein Schweißstrom zwischen den Elektroden 16 und 18 fließen kann, wenn fehlerhafterweise keine Mutter in die Positioniereinheit 28 geladen wurde. Fehlt nämlich im Schweißspalt 20 entweder die Mutter 94 oder der Mutterträger, so gelangt das Isolatorstück 99a in Anlage an das Isolatorgegenstück 99b, so dass eine Luftspaltstrecke im Schweißspalt 20 verbleibt. Dies kann durch geeignete Bemessung des Isolatorstücks 99a und des Isolatorgegenstücks 99b erreicht werden.

Die Klemmelementaufnahme 66 ist in dem in den Fig. 5 bis 7 gezeigten Beispiel relativ beweglich am Schweißarm 14 aufgenommen, so dass die Dämpfungsbewegung in Richtung des Pfeils D erfolgen kann. Hierzu können am Schweißarm 14 und an der Klemmelementaufnahme 66 entsprechende Führungsvorkehrungen, wie etwa Führungsnuten oder/und Führungsvorsprünge vorgesehen sein, welche eine Bewegungsführung der Klemmelementaufnahme 66 in der Dämpfungsrichtung D ermöglichen.

Damit die Klemmelemente 72 und 74 nicht zum Fangraum 76 hin sich von der Klemmelementaufnahme 66 entfernen, umgreift die Klemmelementaufnahme 66 jedes der Klemmelemente 72 und 74 an ihrem Außenumfang 73 bzw. 75 um mehr als 180°, im vorliegenden Fall um etwa 220°.

## Patentansprüche

1. Schweißgerät zur Verschweißung eines Kleinteils, insbesondere einer Mutter, mit einem Kleinteilträger, umfassend
wenigstens zwei Schweißelektroden (16, 18), welche mit einem Schweißspalt (20) zwischen sich vorgesehen sind,
wenigstens zwei relativ zueinander bewegliche Schweißarme (12, 14), von welchen jeder wenigstens eine Schweißelektrode (16, 18) trägt, wobei eine Relativbewegung der Schweißarme (12, 14) eine Veränderung der Schweißspaltweite (22) bewirkt, sowie
ein numerisch steuerbarer Elektromotor (30) als Kraftgerät, welches als Relativbewegungsantrieb mit wenigstens einem der Schweißarme (14) über ein Bewegung und Kraft übertragendes Getriebe (32, 34, 48) gekoppelt ist, um den wenigstens einen Schweißarm (14) zur Bewegung, insbesondere zu einer Nachsetzbewegung während eines Schweißvorgangs, relativ zum jeweils anderen Schweißarm (12) anzutreiben, **dadurch gekennzeichnet, dass** das Getriebe (32, 34, 48) eine mechanische Kurvensteuerung (34, 48) umfasst, bei welcher an einem der Bauteile aus Elektromotor (30) und Schweißarm (14) ein Nocken (34), vorzugsweise in Form einer Stützrolle vorgesehen ist, der an einer Nockenbahn (48a, 48b) verschiebbar anliegt, welche mit dem jeweils anderen Bauteil aus Elektromotor (30) und Schweißarm (14) verbunden ist.

2. Schweißgerät nach Anspruch 1,
**dadurch gekennzeichnet, dass** der Elektromotor (30) ein sich längs einer Motorerstreckungsachse (36) erstreckendes längliches Bauteil ist, wobei der Motor (30) derart angeordnet ist, dass die Motorerstreckungsachse (36) im Wesentlichen parallel zu einer Schweißarmlängsachse (38) eines Schweißarms (14) ist.

3. Schweißgerät nach Anspruch 1 oder 2,
**dadurch gekennzeichnet, dass** die wenigstens zwei Schweißarme (12, 14) mit parallelen oder quasi-parallelen Schweißarmlängsachsen (38, 40) angeordnet sind.

4. Schweißgerät nach einem der vorhergehenden Ansprüche,
**dadurch gekennzeichnet, dass** die wenigstens zwei Schweißarme (12, 14) relativ zueinander verschwenkbar sind, vorzugsweise um eine zu den Schweißarmlängsachsen (38, 40) beider Schweißarme orthogonale Schwenkachse (A).

5. Schweißgerät nach Anspruch 4,
**dadurch gekennzeichnet, dass** das Getriebe (32, 34, 48) eine eine Drehbewegung in eine Translationsbewegung umsetzende Vorrichtung (32) aufweist, etwa einen Gewindetrieb.

6. Schweißgerät nach einem der vorhergehenden Ansprüche,
**dadurch gekennzeichnet, dass** ein Gehäuse (42) des Elektromotors (30) mit einem ortsfesten Schweißarm (14) mittelbar, etwa über ein gemeinsames Gestell, oder unmittelbar gekoppelt ist und ein relativ zum Gehäuse (42) bewegliches Bewegungsausgabeteil des Elektromotors (30) mit einem relativ zum ortsfesten Schweißarm (12) beweglichen Schweißarm (14) gekoppelt ist.

7. Schweißgerät nach einem der vorhergehenden Ansprüche,
**dadurch gekennzeichnet, dass** es eine Schweißsteuerung zur Steuerung des Schweißstromflusses (I_{S}) durch die Schweißelektroden (16, 18) und eine Motorsteuerung zur Steuerung der Bewegung (I_{M}) des Bewegungsausgabeteils des Elektromotors (30) umfasst, wobei die Motorsteuerung derart ausgebildet ist und mit der Schweißsteuerung zusammenwirkt, dass der Motor (30) in Abhängigkeit vom zeitlichen Verlauf des Schweißstroms (I_{S}) zur Nachsetzbewegung angewiesen wird.

8. Schweißgerät nach Anspruch 7,
**dadurch gekennzeichnet, dass** die Motorsteuerung derart ausgebildet ist, dass sie den Motor (30) zur Nachsetzbewegung anweist, bevor der Schweißstrom (I_{S}) eine Stärke erreicht hat, welche ein Aufschmelzen von Material am Kleinteil oder/und am Kleinteilträger führt.

9. Schweißgerät nach Anspruch 7 oder 8,
**dadurch gekennzeichnet, dass** die Motorsteuerung einen Speicher aufweist, in welchem wenigstens eine charakteristische Steuergröße (Δt_{TR}) des Motors (30) hinterlegt ist, wobei der Zeitpunkt (t_{M}) der Bewegungsanweisung des Motors (30) durch die Motorsteuerung nach Maßgabe der wenigstens einen charakteristischen Steuergröße (Δt_{TR}) bestimmt ist.

10. Schweißgerät nach einem der vorhergehenden Ansprüche,
**dadurch gekennzeichnet, dass** es ein Mutter-Schweißgerät (10) zum Anschweißen von Muttern an einen Mutterträger ist.

11. Schweißgerät als Mutter-Schweißgerät nach Anspruch 10,
**dadurch gekennzeichnet, dass** es eine Positioniereinheit (28) zur Aufnahme einer zu verschweißenden Mutter (94) im Schweißspalt (20) aufweist, wobei die Positioniereinheit (28) zwei einen Fangraum (76) zwischen sich definierende Klemmelemente (72, 74) umfasst, welche jeweils um eine Klemmdrehachse (V₇₂, V₇₄) zwischen einer Mutter-Ladestellung und einer Mutter-Haltestellung drehbar in einer Klemmelementaufnahme (66) aufgenommen sind, wobei die Klemmdrehachsen (V₇₂, \/₇₄) vorzugsweise im Wesentlichen parallel sind.

12. Schweißgerät nach Anspruch 11,
**dadurch gekennzeichnet, dass** die Klemmelemente (72, 74) im Wesentlichen spiegelsymmetrisch bezogen auf eine Symmetrieebene (SE) angeordnet und ausgebildet sind, welche eine Mutter-Laderichtung (L) einer in die Positioniereinheit (28) zu ladenden Mutter (94) und eine Längsmittelachse (MA) einer in der Positioniereinheit (28) gehaltenen Mutter (94) enthält.

13. Schweißgerät nach Anspruch 11 oder 12,
**dadurch gekennzeichnet, dass** an der Positioniereinheit (28) Drehbegrenzungsmittel (78, 80, 82, 84) vorgesehen sind, welche eine Drehbewegung der Klemmelemente (72, 74) winkelmäßig begrenzen.

14. Schweißgerät nach einem der Ansprüche 11 bis 13,
**dadurch gekennzeichnet, dass** jedes Klemmelement (72, 74) wenigstens eine Anlagefläche (86, 88), vorzugsweise eine Mehrzahl von Anlageflächen (86, 88), aufweist, welche dazu ausgebildet ist, bei in der Positioniereinheit (28) gehaltener Mutter (94) an Werkzeugangriffsflächen (90, 92) am Außenumfang der Mutter (94) in Anlageeingriff zu sein.

15. Schweißgerät nach einem der Ansprüche 11 bis 14,
**dadurch gekennzeichnet, dass** wenigstens ein, vorzugsweise jedes Klemmelement (72, 74) an der Seite einer Fangraumeintrittsöffnung (76a) einen Hintergriffsvorsprung (98) aufweist, welcher in der Mutter-Haltestellung der Klemmelemente (72, 74) die Mutter (94) zur Verhinderung einer Mutterbewegung entgegen der Mutter-Laderichtung (L) hintergreift, wobei der Hintergriffsvorsprung (98) derart bemessen ist, dass die Weite der Fangraumeintrittsöffnung (78a) in der Mutter-Ladestellung wenigstens einer orthogonal zu einer Werkzeugangriffsfläche (90) gemessenen Breite der zu verschweißenden Mutter (94) entspricht.

16. Schweißgerät nach einem der Ansprüche 11 bis 15,
**dadurch gekennzeichnet, dass** ein Klemmelement (72, 74), vorzugsweise beide Klemmelemente (72, 74), einen zylindrischen Umfangswandabschnitt aufweist, welchen die Klemmelementaufnahme um mehr als 180°, vorzugsweise 200° bis 240°, besonders bevorzugt etwa 220°, umgreift.

17. Schweißgerät nach einem der Ansprüche 11 bis 16, **dadurch**
**gekennzeichnet, dass** die Klemmelementaufnahme (66) der Positioniereinheit (28) in eine Bewegungsrichtung (D) beweglich an einem der Schweißarme (12, 14) vorgesehen ist, wobei die Mutter-Laderichtung (L) zumindest eine in die Bewegungsrichtung (D) der Klemmelementaufnahme (66) weisende Richtungskomponente aufweist, vorzugsweise die beiden Richtungen gleichgerichtet sind.

18. Schweißgerät nach Anspruch 17,
**dadurch gekennzeichnet, dass** die Klemmelementaufnahme (66) in eine vorbestimmte Stellung relativ zu einer der Schweißelektroden (16, 18) vorgespannt ist.

## Claims

1. A welding apparatus for welding a small component, in particular a nut, with a small-component support, comprising
at least two welding electrodes (16,18) which are provided with a welding gap (20) between them,
at least two welding arms (12,14) movable relative to one another and each of which carries at least one welding electrode (16,18), wherein a relative movement of the welding arms (12,14) causes a variation in the welding gap width (22), as well as
a numerically controllable electric motor (30) as power device which is coupled as a relative motion drive to at least one of the welding arms (14) via a transmission (32,34,48) transmitting motion and power so as to impart motion, in particular a slipping movement during a welding operation, relative to the respective other welding arm (12), **characterised in that** the transmission (32,34,48) comprises a mechanical cam control (34,38) in which a cam (34), preferably in the form of a support roller, is provided on one of the components comprising the electric motor (30) and the welding arm (14), which cam is applied displaceably against a cam path (48a,48b) which is connected with the respective other component comprising the electric motor (30) and the welding arm (14).

2. A welding apparatus according to Claim 1,
**characterised in that** the electric motor (30) is an elongate component extending along a motor extension axis (36), wherein the motor (30) is arranged so that the motor extension axis (36) is substantially parallel to a welding arm longitudinal axis (38) of a welding arm (14).

3. A welding apparatus according to Claim 1 or 2,
**characterised in that** the at least two welding arms (12,14) are arranged with parallel or almost parallel welding arm longitudinal axes (38,40).

4. A welding apparatus according to any one of the preceding Claims,
**characterised in that** the at least two welding arms (12,14) are pivotable relative to one another, preferably about a pivot axis (A) orthogonal to the welding arm longitudinal axes (38,40) of both welding arms.

5. A welding apparatus according to Claim 4,
**characterised in that** the transmission (32,34,48) has a device (32), for instance a threaded drive, converting a rotating motion into a translatory motion.

6. A welding apparatus according to any one of the preceding Claims,
**characterised in that** a housing (42) of the electric motor (30) is coupled to a stationary welding arm (14) indirectly, for instance via a common frame, or directly, and a motion-output part of the electric motor (30), which can move relative to the housing (42), is coupled to a welding arm (14) which can move relative to the stationary welding arm (12) .

7. A welding apparatus according to any one of the preceding Claims,
**characterised in that** it comprises a welding control means for controlling the welding current flow (I_{S}) through welding electrodes (16,18) and a motor control means for controlling the movement (I_{M}) of the motion-output part of the electric motor (30), wherein the motor control means is so designed and co-operates with the welding control means that the motor (30) is instructed to carry out the slipping movement depending on the time characteristic of the welding current (I_{S}).

8. A welding apparatus according to Claim 7,
**characterised in that** the motor control means is designed so that it instructs the motor to carry out the slipping movement (I_{S}) before the welding current (I_{S}) is of a strength which results in melting of material on the small component and/or on the small-component support.

9. A welding apparatus according to Claim 7 or 8,
**characterised in that** the motor control means has a memory in which is deposited at least one characteristic control variable (□t_{TR}) of the motor (30), wherein the time (t_{M}) of the movement instruction of the motor (30) is determined by the motor control means according to the at least one characteristic control variable (□t_{TR}) .

10. A welding apparatus according to any one of the preceding Claims,
**characterised in that** it is a nut-welding apparatus (10) for welding nuts to a nut support.

11. A welding apparatus as a nut-welding apparatus according to Claim 10,
**characterised in that** it has a locating unit (28) for accommodating a nut (94) to be welded in the welding gap (20), wherein the locating unit (28) comprises two clamping elements (72,74) which between them define a receiving chamber (76) and which in each case are accommodated rotatably about a clamping axis of rotation (V₇₂, V₇₄) between a nut-loading position and a nut-retaining position in a clamping element receptacle (66), wherein the axes of rotation (V₇₂, V₇₄) are preferably substantially parallel.

12. A welding apparatus according to Claim 11,
**characterised in that** the clamping elements (72,74) are arranged and designed substantially mirror-symmetrically in relation to a plane of symmetry (SE), which contains a nut-loading direction (L) of a nut (94) to be loaded into the locating unit (28) and a longitudinal centre axis (MA) of a nut (94) retained in the locating unit (28).

13. A welding apparatus according to Claim 11 or 12,
**characterised in that** rotation-limiting means (78,80,82,84) are provided on the locating unit (28), which angularly limit any rotating movement of the clamping elements (72,74).

14. A welding apparatus according to any one of Claims 11 to 13,
**characterised in that** each clamping element (72,74) has at least one abutment surface (86,88), preferably a plurality of abutment surfaces (86,88), which with the nut retained in the locating unit (28) is designed to be in abutting engagement against tool engagement surfaces (90,92) on the outer circumference of the nut (94).

15. A welding apparatus according to any one of Claims 11 to 14,
**characterised in that** at least one, preferably each clamping element (72,74) has on the side of a receiving chamber inlet opening (76a) an engagement projection (98) which in the nut-retaining position of the clamping elements (72,74) engages behind the nut (94) so as to prevent nut movement counter to the nut-loading direction (L), wherein engagement projection (98) is of such a size that the width of the receiving chamber inlet opening (78a) in the nut-loading position corresponds at least to a width of the nut (94) to be welded measured orthogonally to a tool engagement surface (90).

16. A welding apparatus according to any one of Claims 11 to 15,
**characterised in that** one clamping element (72,74), preferably both clamping elements (72,74), has a cylindrical circumferential wall portion which embraces the clamping element receptacle by more than 180°, preferably 200° to 240°, especially preferably 220°.

17. A welding apparatus according to any one of Claims 11 to 16,
**characterised in that** the clamping element receptacle (66) of the locating unit (28) is provided movably on one of the welding arms (12,14) in a movement direction (D), wherein the nut-loading direction (L) has at least one directional component facing in the movement direction (D) of the clamping element receptacle (66), preferably the two directions are equidirectional.

18. A welding apparatus according to Claim 17,
**characterised in that** the clamping element receptacle (66) is biased into a predetermined position relative to one of the welding electrodes (16, 18).

## Revendications

1. Dispositif de soudage pour souder une petite pièce, en particulier un écrou, avec un support de petite pièce, comprenant au moins deux électrodes de soudage (16, 18) qui sont prévues avec une fente de soudage (20) entre elles, au moins deux bras de soudage (12, 14) déplaçables l'un par rapport à l'autre, chacun supportant au moins une électrode de soudage (16, 18), un mouvement relatif des bras de soudage (12, 14) provoquant une modification de l'écartement de la fente de soudage (22), ainsi qu'un moteur électrique à commande numérique (30) en tant qu'appareil de transmission de force, lequel est couplé en tant qu'entraînement de mouvement relatif au moins à l'un des bras de soudage (14) par l'intermédiaire d'un mécanisme de transmission de mouvement et de force (32, 34, 48) afin d'entraîner au moins un des bras de soudage (14) respectivement par rapport à un autre des bras de soudage (12), et ce de manière à le mettre en mouvement, et plus particulièrement en un mouvement d'avance pendant un processus de soudage, **caractérisé en ce que** le mécanisme (32, 34, 38) comprend un dispositif de commande de virage mécanique (34, 38) pour lequel on prévoit une came (34) sur l'une des pièces, à savoir le moteur électrique (30) ou le bras de soudage (14), de préférence sous la forme d'un rouleau de support, qui repose de manière déplaçable contre un chemin de came (48a, 48b) en liaison respective avec l'autre des pièces, à savoir le moteur électrique (30) ou le bras de soudage (14).

2. Dispositif de soudage selon la revendication 1,
**caractérisé en ce que** le moteur électrique (30) est une pièce oblongue s'étendant le long d'un axe d'extension du moteur (36), le moteur (30) étant disposé de manière à ce que l'axe d'extension du moteur (36) soit essentiellement parallèle à un axe longitudinal de bras de soudage (38) d'un bras de soudage (14).

3. Dispositif de soudage selon la revendication 1 ou 2,
**caractérisé en ce que** les au moins deux bras de soudage (12, 14) sont disposés avec des axes longitudinaux de bras de soudage (38, 40) parallèles ou quasi-parallèles.

4. Dispositif de soudage selon l'une quelconque des revendications précédentes,
**caractérisé en ce que** les au moins deux bras de soudage (12, 14) peuvent pivoter l'un par rapport à l'autre, de préférence autour d'un axe de pivotement (A) orthogonal par rapport aux axes longitudinaux de bras de soudage (38, 40) des deux bras de soudage.

5. Dispositif de soudage selon la revendication 4,
**caractérisé en ce que** le mécanisme (32, 34, 48) présente un dispositif (32) transformant un mouvement de rotation en un mouvement de translation, par exemple une vis d'entraînement.

6. Dispositif de soudage selon l'une quelconque des revendications précédentes,
**caractérisé en ce qu'**un boîtier (42) du moteur électrique (30) est couplé de manière indirecte, par exemple par l'intermédiaire d'une monture commune, ou bien est couplé de manière directe à un bras de soudage stationnaire (14), et **en ce qu'**un élément de délivrance de mouvement du moteur électrique (30) qui est mobile par rapport au boîtier (42) est couplé à un bras de soudage mobile (14) par rapport au bras de soudage stationnaire (12).

7. Dispositif de soudage selon l'une quelconque des revendications précédentes,
**caractérisé en ce qu'**il comprend une commande de soudage pour la commande du courant de soudage (I_{S}) à travers les électrodes de soudage (16, 18) et une commande de moteur pour la commande du mouvement (I_{M}) de l'élément de délivrance de mouvement du moteur électrique (30), la commande du moteur coopérant avec la commande de soudage et étant réalisée de manière à ce que le moteur (30) reçoive l'instruction pour effectuer un mouvement d'avance en fonction de la variation dans le temps du courant de soudage (I_{S}).

8. Dispositif de soudage selon la revendication 7,
**caractérisé en ce que** la commande du moteur est réalisée de manière à donner l'instruction au moteur (30) pour effectuer un mouvement d'avance avant que le courant de soudage (I_{S}) atteint une puissance, laquelle provoque une fonte du matériau sur la petite pièce et/ou le support de petite pièce.

9. Dispositif de soudage selon la revendication 7 ou 8,
**caractérisé en ce que** la commande du moteur présente une mémoire, dans laquelle au moins une grandeur de commande caractéristique (Δt_{TR}) du moteur (30) est enregistrée, moyennant quoi le moment (t_{M}) de l'instruction donnée au moteur (30) pour effectuer un mouvement est déterminé par la commande du moteur en fonction de cette ou de ces grandeurs de commande caractéristiques (Δt_{TR}).

10. Dispositif de soudage selon l'une quelconque des revendications précédentes,
**caractérisé en ce qu'**il s'agit d'un dispositif de soudage d'écrous (10) pour souder des écrous sur un support d'écrous.

11. Dispositif de soudage en tant que dispositif de soudage d'écrous selon la revendication 10,
**caractérisé en ce qu'**il présente une unité de positionnement (28) pour la réception d'un écrou (94) à souder dans la fente de soudage (20), l'unité de positionnement (28) comprenant deux éléments de serrage (72, 74) définissant un espace de capture (76) entre eux, lesquels éléments sont respectivement logés de manière rotative autour d'un axe de rotation de serrage (V₇₂, V₇₄) entre une position de chargement d'écrou et une position de fixation d'écrou dans un logement d'élément de serrage (66), moyennant quoi les axes de rotation de serrage (V₇₂, V₇₄) sont de préférence essentiellement parallèles.

12. Dispositif de soudage selon la revendication 11,
**caractérisé en ce que** les éléments de serrage (72, 74) sont réalisés et disposés essentiellement avec une symétrie en miroir par rapport à un plan de symétrie (SE), lequel contient une direction de chargement d'écrou (L) d'un écrou à charger dans l'unité de positionnement (28) et un axe médian longitudinal (MA) d'un écrou (94) tenu dans une unité de positionnement (28).

13. Dispositif de soudage selon la revendication 11 ou 12,
**caractérisé en ce que** l'on prévoit des moyens de limitation de mouvement (78, 80, 82, 84) sur l'unité de positionnement (28), lesquels limitent angulairement un mouvement de rotation des éléments de serrage (72, 74).

14. Dispositif de soudage selon l'une quelconque des revendications 11 à 13,
**caractérisé en ce que** chaque élément de serrage (72, 74) présente au moins une surface de butée (86, 88), de préférence une pluralité de surfaces de butée (86, 88), laquelle surface, lorsque l'écrou (94) est tenu par l'unité de positionnement (28), est réalisée de manière à être en prise de butée au niveau de surfaces d'attaque d'outil (90, 92) sur la périphérie extérieure de l'écrou (94).

15. Dispositif de soudage selon l'une quelconque des revendications 11 à 14,
**caractérisé en ce qu'**au moins un élément de serrage (72, 74), et de préférence chaque élément de serrage, présente sur le côté d'une ouverture d'entrée d'espace de capture (76a) une saillie de prise par l'arrière (98) laquelle, dans la position de tenue de l'écrou des éléments de serrage (72, 74), prend l'écrou (94) par l'arrière pour empêcher un mouvement d'écrou à l'encontre de la direction de chargement d'écrou (L), moyennant quoi la saillie de prise par l'arrière (98) est dimensionnée de manière à ce que la grandeur de l'ouverture d'entrée de l'espace de capture (78a) dans la position de chargement de l'écrou correspond au moins à une largeur mesurée orthogonalement à une surface d'attaque d'outil (90) de l'écrou (94) à souder.

16. Dispositif de soudage selon l'une quelconque des revendications 11 à 15,
**caractérisé en ce qu'**un élément de serrage (72, 74), de préférence les deux éléments de serrage (72, 74), présentent un tronçon de paroi périphérique cylindrique, lesquels sont entourés par le logement d'élément de serrage sur plus de 180°, de préférence sur 200° à 240°, de manière particulièrement préférée sur environ 220°.

17. Dispositif de soudage selon l'une quelconque des revendications 11 à 16,
**caractérisé en ce que** le logement d'élément de serrage (66) de l'unité de positionnement (28) est prévu de manière mobile dans une direction de déplacement (D) sur un des bras de soudage (12, 14), moyennant quoi la directement de chargement d'écrou (L) présente au moins une composante de direction orientée en direction de déplacement (D) du logement d'élément de serrage (66), les deux directions ayant de préférence la même orientation.

18. Dispositif de soudage selon la revendication 17,
**caractérisé en ce que** le logement d'élément de serrage (66) est précontraint dans une position prédéterminée par rapport à l'une des électrodes de soudage (16, 18).
